# EUROPEAN PATENT APPLICATION

(11) **EP 2 801 433 A2**
(43) Date of publication of application: **12.11.2014**
(21) Application number: 14166372.4
(22) Date of filing: 29.04.2014
(51) Int. Cl.: B23K 31/02, B23K 26/32

(54) **Method for manufacturing cutting tool**

(30) Priority: 10.05.2013 JP 2013100101
(71) Applicant: Kanefusa Kabushiki Kaisha, Niwa-gun, Aichi-ken 480-0192 (JP)
(72) Inventor: Nishio, Satoru, Niwa-gun, Aichi-ken, 480-0192 (JP); Yamada, Nobuhide, Niwa-gun, Aichi-ken, 480-0192 (JP); Nakano, Takao, Niwa-gun, Aichi-ken 480-0192 (JP)
(74) Representative: Kuhnen & Wacker

(57) **Abstract**

A circular saw blade (10) is obtained by joining a cutting edge tip (21) made of a hard material to a base (13) of a body metal (11) made of steel containing a carbon content of 0.5 mass% or more. A laser beam of a fiber laser (23) is irradiated to melt the base (13) and form a joint with the cutting edge tip (21), and the laser beam is irradiated again to maintain Vickers' hardness of the body metal (11) below 700 HV. The tempering process is performed by an output lower than an output of the fiber laser (23) in the welding process, by shifting a focus of the fiber laser (23), or a combination thereof.

## Description

### TECHNICAL FIELD

The present invention relates to a method for manufacturing a cutting tool that is used for cutting various materials such as metal, wood, plastic, and ceramic material and is formed by joining a blade made of a hard material to a base of a steel body, and particularly, to a method for manufacturing a cutting tool in which a joint is formed by irradiation of high energy beam such as laser.

### BACKGROUND ART

Hitherto, as a method for manufacturing a cutting tool of this type, as disclosed in Japanese Patent Document 1: JP 3584716 B1, a manufacturing method of disposing nickel-based metal pieces in a joint between the base and a cutting edge tip, and irradiating a high energy beam such as laser only to the base in the vicinity of the joint, thereby joining the cutting edge tip to the base in a joining layer using the nickel-based metal pieces has been known.

Incidentally, for example, in the case of a cutting tool such as a circular saw blade in which a thickness of a steel base metal is about 0.5 mm to 3 mm, in order to secure rigidity of the base metal, a carbon content of the steel material needs to be 0.5 mass% or more. In such a circular saw blade, when using the manufacturing method of irradiating the high energy beam only to the base as described above to join the cutting edge tip to the base, Vickers' hardness of the base becomes high hardness of 700 HV or more, by heating due to irradiation and quenching action of the steel material due to subsequent rapid cooling. For that reason, toughness of the base is lowered and becomes brittle, and as a result, there is high risk of damage to the body metal due to impact during cutting.

### DISCLOSURE OF THE INVENTION

The invention has been made to solve such a problem, and an object thereof is to provide a method of manufacturing a cutting tool in which Vickers' hardness of the base can be secured to 700 HV or less when joining the blade (cutting edge tip) of hard material to the base of the body (body metal) made of steel by irradiation of high energy beam such as laser.

In order to achieve the above-described object, according to the structural characteristics of the invention, there is provided a method of manufacturing a cutting tool formed by joining an edge metal made of a hard material to a base provided in a steel body containing a carbon content of 0.5 mass% or more, wherein the edge metal is melt by irradiation of high energy beam to weld the blade, and Vickers' hardness of the body after joining is set to 700 HV or less by re-irradiating the high energy beam. In addition, as the high energy beam, there is a laser beam such as CO₂ laser, YAG laser, fiber laser, and green laser, or an electron beam, etc. Furthermore, as a steel containing the carbon content of 0.5 mass% or more, there is a carbon tool steel of SK85 and SK75, an alloy tool steel of SKS5 and SKS51, or the like. As the hard material, there is cemented carbide, cermet, high-speed steel, ceramics (alumina, silicon nitride, silicon carbide, zirconia, cubic boron nitride or the like), polycrystalline diamond or the like.

In the invention configured as described above, a high energy beam is irradiated under suitable conditions to form a joint between the base of the steel body containing the carbon content of 0.5 mass% or more and the edge metal, and then irradiated again so that Vickers' hardness of the body can be maintained below 700 HV, and thus the toughness of the body is suitably secured. As a result, in the invention, since the toughness of the base is suitably secured, it is possible to suppress the damage to the body during cutting.

Furthermore, in the present invention, the tempering process is preferably performed by lowering the output of the high energy beam than the output in the welding process, by shifting the focus of the high energy beam process, or by a combination thereof. In this manner, since an irradiation area is expanded by shifting the focus of the beam, energy per unit area irradiated to the base in the same manner as the case of lowering the output itself of the beam is lowered. As a result, according to the invention, since energy per unit area absorbed by the body metal is lowered, it is possible to reliably execute the tempering of body which became the quenching state by the welding process.

Furthermore, in the invention, the tempering process is preferably performed by irradiating the high energy beam multiple times at the same position or at different positions. In this manner, it is possible to adjust an irradiation starting position or a stop position of the beam irradiation, or a return position when performing the reciprocate irradiation. Accordingly, concentration of heating is suppressed particularly by suppressing the irradiation energy at a position such as an end portion of the base in which diffusion of heat is unlikely to occur. Thus it is possible to perform uniform energy irradiation to the base.

In the invention, by irradiating a high energy beam to the vicinity of a boundary between the edge metal of hard material and the base of the steel body containing the carbon content of 0.5 mass% or more under suitable conditions, and particularly by combining the welding process using the high energy radiation and the tempering process using the irradiation of energy lower than that, Vickers' hardness of the body can be maintained below 700 HV. As a result, in the invention, since the toughness of the base is suitably secured, it is possible to suppress the damage to the body during cutting.

### BRIEF DESCRIPTION OF THE DRAWINGS

Fig. 1 is a front view schematically illustrating a circular saw blade as a cutting tool according to an embodiment of the invention.
Fig. 2 is a partially enlarged front view illustrating an enlarged state in which a cutting edge tip is joined to a base.
Fig. 3 is a partially enlarged side cross-sectional view illustrating an enlarged state in which the cutting edge tip is joined to the base.
Fig. 4 is an explanatory view illustrating an assembling process of the cutting edge tip and an intermediate layer to the base before laser irradiation.
Fig. 5 is an enlarged plan view illustrating an aspect of irradiation of laser in the welding process of the cutting edge tip to the base.
Fig. 6 is an enlarged plan view illustrating an aspect of tempering irradiation of laser to the base.
Fig. 7 is an enlarged front view illustrating the aspect of tempering irradiation of laser to the base.

### MODE(S) FOR CARRYING OUT THE INVENTION

Hereinafter, an embodiment of the invention will be described below with reference to the drawings.

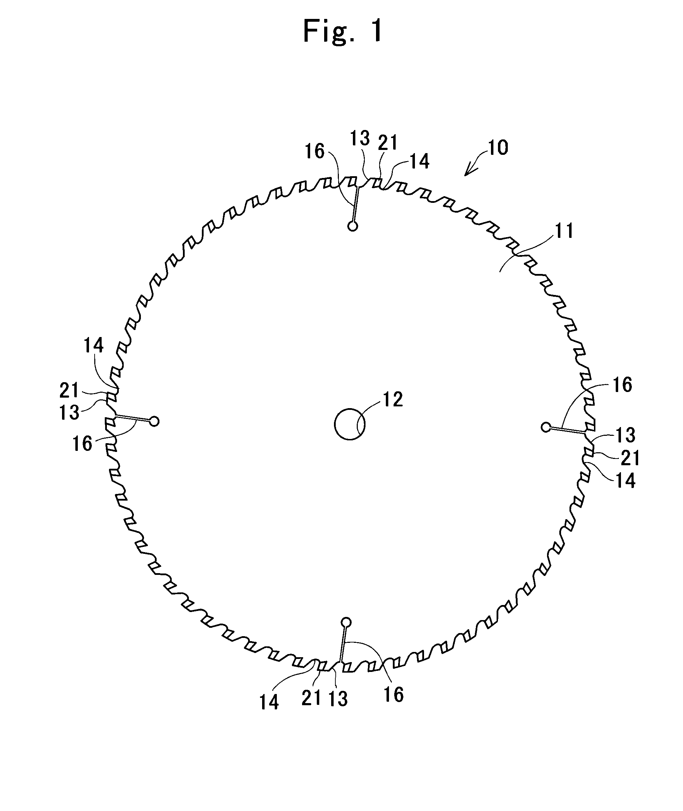

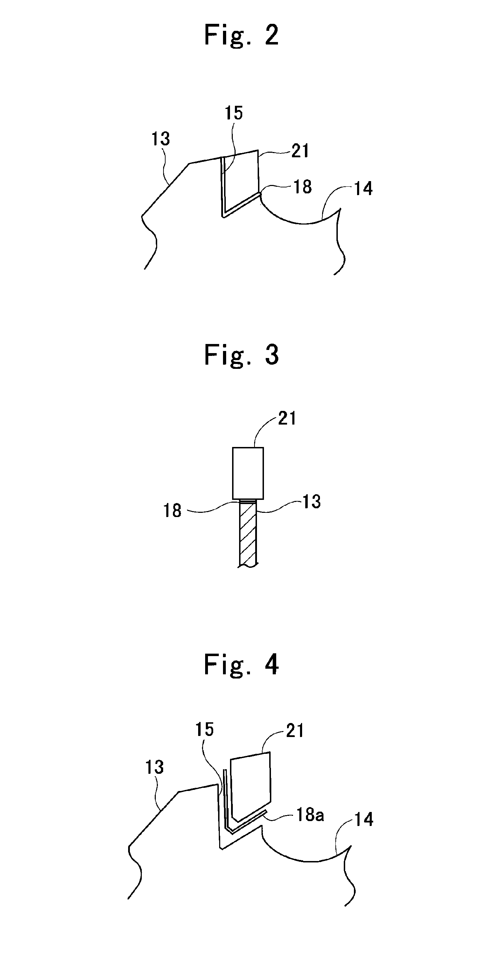

Fig. 1 illustrates a circular saw blade 10 as a cutting tool according to an embodiment in a front view. The circular saw blade 10 is provided with a body metal 11 that is a disc-shaped body made of steel. The body metal 11 is a thin plate made of steel having a carbon content of 0.5 mass% or more, Vickers' hardness of 700 HV or less, and a thickness of 2 mm, and is provided with a center hole 12 fitted to a rotation axis of a processing machine at a center thereof. An outer peripheral side of the body metal 11 becomes bases 13 radially projecting in the radial direction at multiple positions with equal intervals in a circumferential direction, and a gullet 14 relatively recessed in the radial direction is provided between the bases 13. On a distal end side of a rotation front side of the base 13, as illustrated in Fig. 2 in detail, multiple mounting seats 15 for mounting a cutting edge tip 21 as an edge metal are provided by cutting in a V shape at a central angle of substantially 60°.

As illustrated in Figs. 2 and 3, the cutting edge tip 21 is joined to the mounting seat 15 with a thin intermediate layer 18 made of nickel alloy interposed therebetween. As the nickel alloy, Fe-Ni, Fe-Ni-Co or the like is adopted. In addition, as the material of the intermediate layer 18, in place of the nickel alloy, pure nickel, a silver solder material, a copper solder material or the like may be adopted, and it is also possible to omit the intermediate layer as necessary. The cutting edge tip 21 is made of cemented carbide, has a quadrilateral shape having a thickness of 3 mm, and has a shape matched to close contact to the mounting seat 15.

Next, a method of manufacturing the circular saw blade according to the embodiment will be described.

First, the welding process is performed. As illustrated in Fig. 4, a thin nickel alloy piece 18a is mounted to the mounting seat 15 provided in the base 13 of the body metal 11 placed on a table that is not illustrated, and the cutting edge tip 21 is superimposed on and pressed against the nickel alloy piece 18a and is fitted to the mounting seat 15. Here, the body metal 11 is fixed on the table by a clamp jig (not illustrated) in a portion near the base 13 in which the cutting edge tip 21 is welded. As the clamping jig, materials having satisfactory thermal conductivity such as copper are used. As a result, it is possible to quickly discharge heat during laser irradiation to be described later, thereby suppressing the influence due to heat to the body metal 11 and the cutting edge tip 21. Furthermore, although not illustrated, usually, the cutting edge tip 21 is preferably pressed against the mounting seat 15 by a pressing member such as a cutting edge tip pressure cylinder from the outside, and therefore, a cutting edge tip position does not move during welding. Thus, the subsequent welding of the cutting edge tip 21 to the mounting seat 15 is accurately performed.

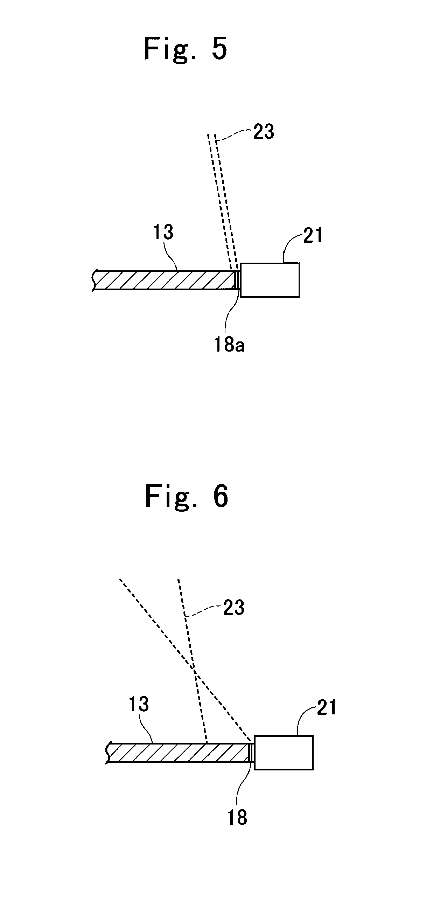

Next, as illustrated in Fig. 5, laser beam of predetermined high power using a fiber laser 23 is irradiated to the nickel alloy piece 18a as a boundary between the base 13 and the cutting edge tip 21 and the surface side of the base 13 in the periphery thereof to melt the base 13 and the nickel alloy piece 18a, and joining to the cutting edge tip 21 is formed. In this case, since the base 13 is thin as 2 mm and the heat conduction is fast, even if the irradiation of laser light is performed only from one surface side of the base 13, uniform heating is performed. However, when the base 13 is thick, in order to secure uniform conduction of heat to form uniform joining, it is preferred to irradiate laser beam from both sides of the base 13.

As illustrated in Fig. 5, the irradiation of the fiber laser 23 is performed to be inclined by substantially 10° to the base 13 side from a vertical direction with respect to the flat surface of the base 13, whereby unnecessary interference to incident light due to an occurrence of reflected beam is suppressed. Furthermore, during irradiation of the fiber laser 23, it is desirable to blow an inert shielding gas such as nitrogen gas or argon gas to the joint between the base 13 and the cutting edge tip 21, and thus, oxidation of the base 13 and the cutting edge tip 21 due to heating of radiation is suppressed. By performing quenching on the body metal 11 by heating of the welding process, Vickers' hardness of the base 13 and the body metal 11 portion in the periphery thereof becomes 700 HV or more. Vickers' hardness is measured by a micro Vickers' hardness tester.

Next, the tempering process of the body metal 11 is performed by re-irradiation of the fiber laser 23. As illustrated in Fig. 6, unlike the above-described welding process, in the re-irradiation process, the width of the irradiation region is widened by shifting the focus of the laser beam from the fiber laser 23, and tempering is performed by irradiation energy having the output lower than the welding process.

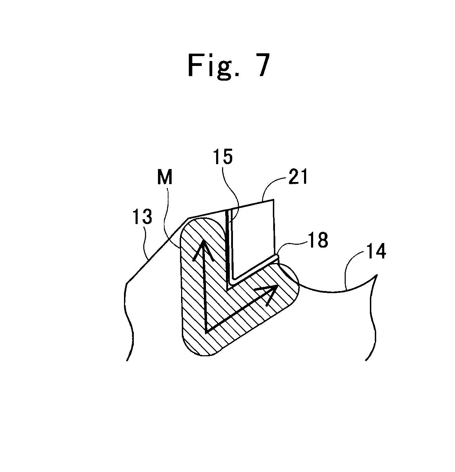

As illustrated in Fig. 7, in re-irradiation process, repeated scanning is performed along the mounting seat 15 as illustrated by an arrow about three times, in a wide range M over different positions rather than the same position near the joint between the body metal 11 and the cutting edge tip 21. Furthermore, it is possible to adjust the start position and the stop position of irradiation and the return position at the time of reciprocating depending on the shape of the base 13. Thus, it is possible to suppress the irradiation to a portion, such as an end portion of the base 13, in which discharge of heat is less likely to occur, the quenching state is avoided even in the re-irradiation of low irradiation energy, and the Vickers' hardness of the body metal 11 is suppressed from being higher than 700 HV. Furthermore, it is desirable to successively perform multiple times of irradiation at a stage in which tempering heat due to the previous irradiation remains in the body metal 11, and thus, it is possible to shorten the time of tempering. In the present embodiment, since the damage to the body metal 11 during cutting using the circular saw blade 10 is suppressed, stable cutting can be performed for a long period of time.

In the above-described embodiment, in the tempering process, re-irradiation is performed in a wide range by shifting the focus of the laser beam from the fiber laser 23 and by irradiation energy having the output lower than that in the welding. Alternatively, it is also possible to perform tempering only by low irradiation energy. In that case, the number of times of irradiation of the laser beam is increased, and the irradiation is performed over a wide range of the irradiation region as illustrated in Fig. 7. Alternatively, re-irradiation may be performed only by shifting the focus of the laser beam.

In addition, in the above-described embodiment, the description has been given of the case of the circular saw blade as the cutting tool, but not limited thereto, and the invention can be similarly applied to a planar knife or the like. Furthermore, the material of the cutting edge tip is not limited to the cemented carbide, and may be cermet, high-speed steel, various ceramics, polycrystalline diamond or the like. Furthermore, electron beam may also be used as high energy beam. The laser is not limited to the fiber laser, and may also be CO₂ laser, YAG laser, green laser or the like. Additionally, the above-described embodiment is an example, and can be implemented with various modifications without departing from the scope of the invention.

## Claims

1. A method of manufacturing a cutting tool formed by joining an edge metal made of a hard material to a base provided in a steel body containing a carbon content of 0.5 mass% or more,
wherein the method is performed by combination of a welding process of melting the base by irradiation of high energy beam to weld the edge metal and a tempering process of performing tempering of the base by re-irradiating the high energy beam, and Vickers' hardness of the body after joining is set to 700 HV or less.

2. The method of manufacturing the cutting tool according to claim 1,
wherein the tempering process is performed, by lowering an output of the high energy beam than an output in the welding process, by shifting a focus of the high energy beam, or by a combination thereof.

3. The method of manufacturing the cutting tool according to claim 1 or 2,
wherein the tempering process is performed by irradiating the high energy beam multiple times at the same position or different positions.
